# EUROPEAN PATENT APPLICATION

(11) **EP 2 640 078 A2**
(43) Date of publication of application: **18.09.2013**
(21) Application number: 11855081.3
(22) Date of filing: 30.11.2011
(51) Int. Cl.: H04N 13/04, G02F 1/13

(54) **IMAGE DISPLAY SYSTEM, DISPLAY DEVICE, AND SHUTTER GLASSES**

(30) Priority: 07.01.2011 JP 2011002436
(71) Applicant: Sony Corporation, Tokyo 108-0075 (JP)
(72) Inventor: TSURUMOTO, Takashi, Tokyo 108-0075 (JP)
(74) Representative: Ealey, Douglas Ralph
(86) International application number: PCT/JP2011/077646
(87) International publication number: WO 2012/093532

(57) **Abstract**

To preferably present a stereoscopic image to a viewer by controlling opening and closing timing of shutter lenses through intermittent communication between a display device and shutter glasses.

A display device 11, when recognizing switchover timing of a display mode in advance, commands continuous reception using periodically transmitting synchronization packet. Since shutter glasses 13 starts the continuous reception in advance, even if the display device 11 transmits a packet commanding switchover of the display mode at any timing when display on a display panel 210 is switched over from 3D to 2D, the shutter glasses 13 can receive the packet for the switchover in appropriate shutter opening and closing control.

## Description

### Technical Field

The present invention relates to an image display system, a display device and shutter glasses which are configured to combine a display device displaying multiple images different from each other in a time-sharing manner with shutter glasses worn by a viewer, and which presents a stereoscopic image to the viewer in synchronization with switchover of the images in the display device side and by opening and closing left and right shutter lenses of the shutter glasses, and particularly relates to an image display system, a display device and shutter glasses which control opening and closing timing of the shutter lenses by allowing intermittent communication between the display device and the shutter glasses.

### Background Art

It is possible to present a stereoscopic image displayed stereoscopically to a viewer by displaying an image having a parallax to left and right eyes. One method of presenting the stereoscopic image includes those which present the image with the parallax to both eyes after the viewer wears glasses having special optical characteristics.

For example, a time-sharing stereoscopic image display system are configured to combine a display device displaying multiple images different from each other in a time-sharing manner with shutter glasses worn by a viewer. The display device alternately displays a right eye image and a left eye image on a screen in a very short cycle. In contrast, the shutter glasses worn by the viewer include a shutter mechanism configured to have liquid crystal lenses respectively for a left eye portion and a right eye portion. While the left eye image is displayed, in the shutter glasses, the left eye portion of the shutter glasses transmits light and the right eye portion blocks the light. In addition, while the right eye image is displayed, the right eye portion of the shutter glasses transmits light and the left eye portion blocks the light (for example, refer to PTLs 1 to 3). That is, the display device displays the left eye image and the right eye image in a time-sharing manner and the shutter glasses select the image using the shutter mechanism in synchronization with display switchover of the display device so as to present the stereoscopic image to the viewer.

In the time-sharing stereoscopic image display system, when displaying the left eye image and the right eye image in the time-sharing manner, it is necessary to separate the left eye image and the right eye image from each other so as not to cause crosstalk. In general, the display device notifies the shutter glasses of switchover timing of the left eye image and the right eye image such that based on the notification, the shutter glasses switch over the images and synchronize opening and closing of the left and right shutter lenses (for example, refer to PTL 4).

Considering that a user views a stereoscopic image in the user's favorite indoor place, it is preferable that the shutter glasses be a wireless type, in other words, a battery drive type. In wireless communication between the display device and the shutter glasses, it is possible to use infrared communication or a wireless network such as IEEE802.15.4. The latter wireless network is a two-way communication, which also enables data communication from the shutter glasses to the display device. For example, Japanese Patent Application No. 2009-276948 already assigned to the present applicant discloses an image display system using the wireless network.

The wireless network needs high power consumption as compared to the infrared communication. For this reason, a battery is under excessive burden if the display device notifies the timing at every opening and closing of the shutter lenses and the shutter glasses always wait for reception of the notification. In contrast, a method can be considered in which the shutter glasses periodically receive a packet for synchronization processing from the display device so as to synchronize the opening and closing of the shutter lenses with the timing of the packet reception. In this case, the shutter glasses, without waiting for the reception at all times, performs reception processing only at the timing before and after receiving the packet, and stops the reception operation during the other period, which enables reduction in power consumption.

However, during the period when the shutter glasses stop the reception operation, even if the packet is transmitted from the display device, there is a problem in that the shutter glasses cannot receive the packet. For example, when the display device switches over display modes from a 3D display to a 2D display, it is necessary to notify the shutter glasses of the display mode switchover and to leave both of the left and right shutter lenses in an open state. If the shutter glasses intermittently receive the notification, the display mode switchover cannot be notified immediately most of the time. That is, the display device has no choice but to wait until the shutter glasses perform the next reception operation so as to notify the shutter glasses of the display mode switchover. As a result, the notification is not given to the shutter glasses until the display mode is switched over in the display device side, the operation of the shutter glasses remains not to be switched over, whereby causing the viewer wearing the shutter glasses to be unable to view a normal display image.

Of course, in a case where the display mode is switched over from a 2D display to a 3D display in the display device side, or even when it is switched over to a display mode other than 2D and 3D, similar problems arise.

### Citation List

### Patent Literature

PTL 1: Japanese Unexamined Patent Application Publication No. 9-138384
PTL 2: Japanese Unexamined Patent Application Publication No. 2000-36969
PTL 3: Japanese Unexamined Patent Application Publication No. 2003-45343
PTL 4: Japanese Unexamined Patent Application Publication No. 2010-287956

### Summary of Invention

### Technical Problem

An object of the present invention is to provide an image display system, a display device and shutter glasses which are excellent and capable of preferably presenting a stereoscopic image to a viewer by opening and closing left and right shutter lenses of the shutter glasses in synchronization with switchover of images in the display device side.

Another object of the present invention is to provide an image display system, a display device and shutter glasses which are excellent and capable of preferably presenting a stereoscopic image to a viewer wearing the shutter glasses by allowing intermittent communication between the display device and the shutter glasses so as to synchronize opening and closing timing of shutter lenses with image switchover.

Still another object of the present invention is to provide an image display system, a display device and shutter glasses which are excellent and enable a viewer wearing the shutter glasses to view an appropriate display image by notifying the shutter glasses intermittently receiving the notification without delay in display mode switchover, when the display mode is switched over in the display device side.

### Solution to Problem

This application is made in view of the above problems. According to the invention of claim 1, there is provided an image display system including
shutter glasses having shutter lenses, a communication unit, and a controller controlling an opening and closing operation of the shutter lenses according to a display mode of an image to be viewed through the shutter lenses; and
a display device having a display unit with a plurality of display modes, and a communication unit communicating with the shutter glasses,
in which the display device, when recognizing in advance that the display mode is to be switched over in the display unit, commands the shutter glasses to perform a reception operation, and transmits a packet notifying switchover of the display mode to the shutter glasses at the point of time when the display mode is switched over in the display unit, and
in which the shutter glasses perform reception processing using the communication unit according to the command from the display device, and start control of the opening and closing operation of the shutter lenses in response to the display mode which has been switched over, according to the received packet notifying that the display mode has been switched over.

Note that, herein the term "system" refers to one in which a plurality of devices (or functional modules for realizing specific functions) are logically aggregated, and it does not matter whether or not each of the devices or the functional modules are present inside a single housing.

According to the invention of claim 2, in the image display system according to claim 1, the shutter glasses cause the communication unit to perform intermittent reception. The display device, when recognizing in advance that the display mode is to be switched over in the display unit, using a period when the shutter glasses cause the communication unit to perform a reception operation, transmits a packet commanding the shutter glasses to perform the reception operation to the shutter glasses, and in contrast the shutter glasses, when receiving the command packet, start continuous reception or shorten a cycle of the intermittent reception.

According to the invention of claim 3, in the image display system according to claim 2, the shutter glasses restart the intermittent reception on the original cycle after starting the continuous reception or shortening the cycle of the intermittent reception, when receiving the packet notifying the switchover of the display mode from the display device, or when the packet cannot be received within a predetermined period.

According to the invention of claim 4, in the image display system according to claim 1, the display device, when recognizing in advance timing when the display mode is to be switched over in the display unit, commands the shutter glasses to perform the reception operation in response to the timing, and in contrast the shutter glasses perform the reception operation of the communication unit in response to the timing, according to the command received from the display device.

According to the invention of claim 5, in the image display system according to claim 1, the shutter glasses cause the communication unit to intermittently perform reception. The display device, when the display unit displays a stereoscopic image, using a reception period of intermittent reception in the shutter glasses side, transmits a synchronization packet including information required for the opening and closing operation of the shutter lenses in synchronization with display of the stereoscopic image, and in contrast the shutter glasses control the opening and closing operation of the shutter lenses based on content described in the synchronization packet. In addition, the display device, when recognizing in advance that the display mode is to be switched over in the display unit, transmits the synchronization packet including the command of the reception operation to the shutter glasses, using a period when the shutter glasses cause the communication unit to perform the reception operation.

According to the invention of claim 6, in the image display system according to claim 5, the display device describes information related to the current display mode of the display unit, in the synchronization packet, and in contrast the shutter glasses start controlling the opening and closing operation of the shutter lenses in response to the display mode indicated by the received synchronization packet.

In addition, according to the invention of claim 7, there is provided a display device including
a display unit having a plurality of display modes; and
a communication unit communicating with shutter glasses,
in which the display device, when recognizing in advance that the display mode is to be switched over in the display unit, command the shutter glasses to perform a reception operation, and
the display device transmits a packet notifying switchover of the display mode to the shutter glasses at the point of time when the display mode is switched over in the display unit.

According to the invention of claim 8, the shutter glasses cause the communication unit to intermittently perform reception. The display device in the display device according to claim 7, when recognizing in advance that the display mode is to be switched over in the display unit, uses a period when the shutter glasses cause the communication unit to perform a reception operation, and transmits a packet commanding the shutter glasses to perform the reception operation to the shutter glasses.

According to the invention of claim 9, the shutter glasses cause the communication unit to intermittently perform reception. Then, the display device in the display device according to claim 7, when the display unit displays a stereoscopic image, using a reception period of intermittent reception in the shutter glasses side, transmits a synchronization packet including information required for the opening and closing operation of the shutter lenses in synchronization with display of the stereoscopic image. In addition, the display device, when recognizing in advance that the display mode is to be switched over in the display unit, transmits the synchronization packet including the command of the reception operation with respect to the shutter glasses, using a period when the shutter glasses cause the communication unit to perform the reception operation.

According to the invention of claim 10, the display device according to claim 9, describes information related to the current display mode of the display unit, in the synchronization packet.

In addition, according to the invention of claim 11, there are provided shutter glasses including
shutter lenses;
a communication unit and;
shutter glasses including a controller controlling an opening and closing operation of the shutter lenses according to a display mode in a display device, which is viewed through the shutter lenses,
in which the shutter glasses perform reception operation using the communication unit according to notification from the display device in advance that the display mode is to be switched over, and start control of the opening and closing operation of the shutter lenses in response to the display mode which has been switched over, according to the received packet notifying that the display mode has been switched over from the display device.

According to the invention of claim 12, the shutter glasses according to claim 11 cause the communication unit to perform intermittent reception, and the communication unit starts continuous reception or shortens a cycle of the intermittent reception according to the notification from the display device in advance that the display mode is to be switched over.

According to the invention of claim 13, the communication unit in the shutter glasses according to claim 12 restarts the intermittent reception on the original cycle after starting the continuous reception or shortening the cycle of the intermittent reception, when receiving the packet notifying the switchover of the display mode from the display device, or when the packet cannot be received within a predetermined period.

According to the invention of claim 14, in the shutter glasses according to claim 11, the controller, during a reception period of the intermittent reception using the communication unit, receives a synchronization packet including information required for the opening and closing operation of the shutter lenses in synchronization with display of a stereoscopic image, from the display device, and controls the opening and closing operation of the shutter lenses based on content described in the synchronization packet. In addition, the communication unit starts continuous reception or shortens a cycle of the intermittent reception according to the reception of the synchronization packet containing the information notifying in advance that the display mode is to be switched over.

According to the invention of claim 15, information related to the current display mode of the display unit is described in the synchronization packet. The controller in the shutter glasses according to claim 14 starts control of the opening and closing operation of the shutter lenses in response to the display mode indicated by the received synchronization packet.

### Advantageous Effects of Invention

According to the present invention, it is possible to provide an image display system, a display device and shutter glasses which are excellent and capable of preferably presenting a stereoscopic image to a viewer wearing the shutter glasses by controlling opening and closing timing of shutter lenses by allowing intermittent communication between the display device and the shutter glasses.

In addition, according to the present invention, it is possible to provide an image display system, a display device and shutter glasses which are excellent and enable a viewer wearing the shutter glasses to view an appropriate display image, the shutter glasses intermittently receiving the notification without any delay in display mode switchover in the display device side.

Other objects, features and advantages of the present invention will become apparent from more detailed description based on embodiments to be described later and the accompanying drawings.

### Brief Description of Drawings

[Fig. 1] Fig. 1 is a diagram schematically illustrating a configuration example of an image display system.
[Fig. 2] Fig. 2 is a diagram illustrating an internal configuration example of a display device 11.
[Fig. 3] Fig. 3 is a diagram illustrating an internal configuration example of shutter glasses 13.
[Fig. 4A] Fig. 4A is a diagram illustrating a control operation of the shutter glasses 13 in synchronization with a display period of a left eye image L of the display device 11.
[Fig. 4B] Fig. 4B is diagram illustrating a control operation of the shutter glasses 13 in synchronization with a display period of a right eye image R of the display device 11.
[Fig. 5] Fig. 5 is a timing chart illustrating an operation example in a case where control of the shutter glasses 13 is delayed in switchover of a display mode in the display device 11 side.
[Fig. 6] Fig. 6 is a timing chart illustrating an operation example in a case where the display device 11 recognizes switchover of a display mode in advance, and commands the shutter glasses 13 to perform continuous reception.
[Fig. 7] Fig. 7 is a timing chart illustrating an operation example in a case where the display device 11 recognizes switchover of a display mode in advance, and notifies the shutter glasses 13 of timing of commanding the switchover of the display mode.
[Fig. 8] Fig. 8 is a timing chart illustrating an operation example in a case where the display device 11 recognizes switchover of a display mode in advance, and commands the shutter glasses 13 to shorten a cycle of intermittent reception.
[Fig. 9] Fig. 9 is a flowchart illustrating a processing procedure for the display device 11 to transmit a synchronization packet to the shutter glasses 13.
[Fig. 10] Fig. 10 is a flowchart illustrating a processing procedure for the display device 11 to command the shutter glasses 13 to switch over to a display mode.
[Fig. 11A] Fig. 11A is a flowchart illustrating a processing procedure for the shutter glasses 13 to receive a synchronization packet from the display device 11.
[Fig. 11B] Fig. 11B is a flowchart illustrating a processing procedure for the shutter glasses 13 to receive a synchronization packet from the display device 11.
[Fig. 11C] Fig. 11C is a flowchart illustrating a processing procedure for the shutter glasses 13 to receive a synchronization packet from the display device 11.

### Description of Embodiments

Hereinafter, embodiments of the present invention will be described in detail with reference to the drawings.

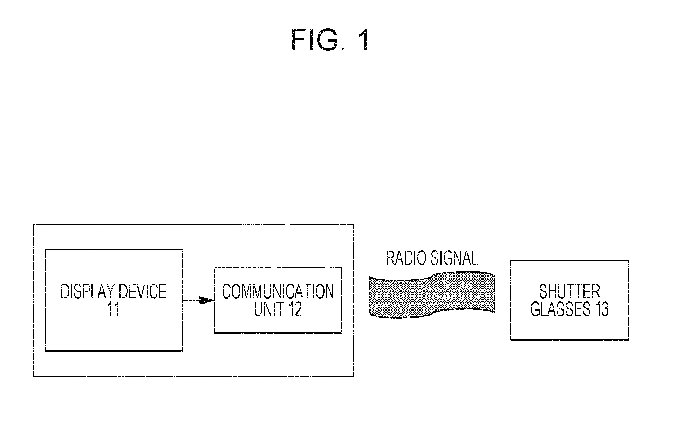

Fig. 1 schematically illustrates a configuration example of an image display system. The image display system is formed from a display device 11 corresponding to a three-dimensional display (stereoscopic view) in combination with shutter glasses 13 having a shutter mechanism, respectively in a left eye portion and a right eye portion. Radio signal are transmitted and received between a communication unit 12 built in a main body of the display device 11 and the shutter glasses 13.

Infrared communication is frequently used in communication between the display device and the shutter glasses, but in the present embodiment, a wireless network by way of radio communication such as IEEE802.15.4 is used. In a system configuration example illustrated in Fig. 1, the display device 11 and the shutter glasses 13 perform communication one-to-one, but the communication unit 12 of the display device 11 is operated as an access point, and it is possible to accommodate multiple shutter glasses respectively operated as a terminal station. Since the wireless network is a two-way communication, data communication can be performed from the shutter glasses 13 to the display device 11 and thereby an available service through the system can be broadened. The image display system using the wireless network is disclosed in Japanese Unexamined Patent Application Publication No. 2009-276948 that is already assigned to the present applicant, for example.

The display device 11 used in a stereoscopic image display is not limited to a particular method. For example, in addition to the traditional cathod ray tube (CRT) display, plasma display panels (PDP), liquid crystal displays (LCD) and electro-luminescence (EL) panels can be used. Among them, in the liquid crystal displays, an active matrix type is general in which a thin file transistor (TFT) is arranged for every pixel. In TFT liquid crystal displays, each pixel is driven by writing a video signal for each scanning line from the top of a screen to the bottom and the display is performed by blocking or transmitting light emitted from Backlight using each pixel.

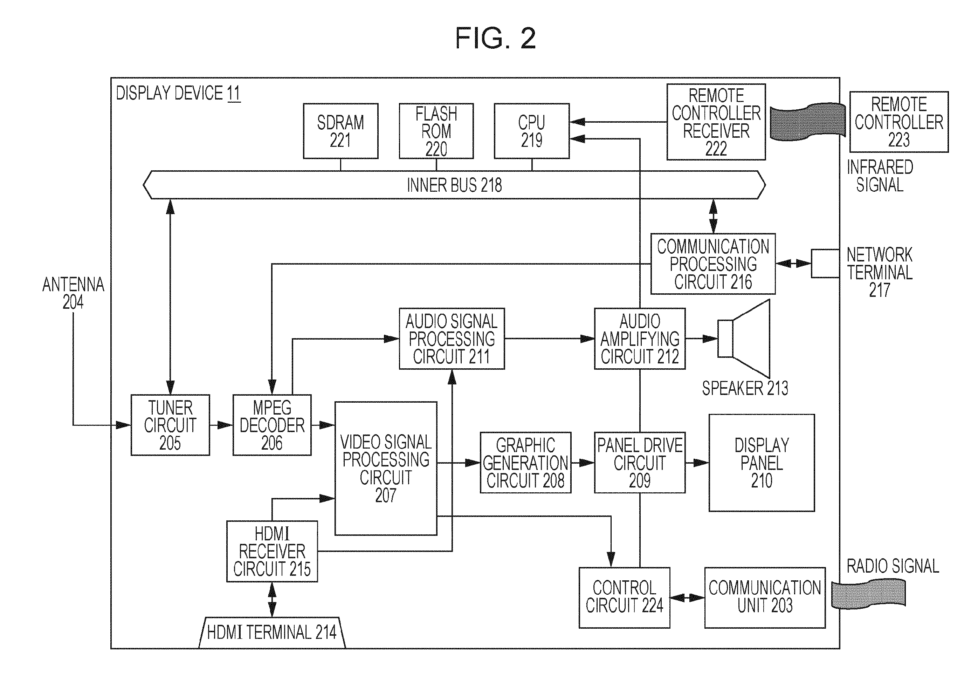

Fig. 2 illustrates an internal configuration example of the display device 11. Herein, each unit will be described.

An antenna 204 supplies received broadcast signals to a tuner circuit 205. In the present embodiment, broadcast waves received by the antenna 204 are subject to an MPEG2-TS system. On the assumption that the MPEG2-TS is applied to an environment where a data transmission error occurs in broadcasting or communication networks, it has also been adopted in Japanese domestic digital broadcasting (digital satellite broadcasting, digital terrestrial broadcasting, digital cable television (CATV)). In the MPEG2-TS, multiple transport stream (TS) packets having the fixed length of 188 bytes are aggregated to configure a transport stream. The transport stream includes packets of information described in a section type table, such as program specific information (PSI) and service information (SI). Out of these, the PSI is information required (control information for tuning) in a system which receives the information by selecting a desired broadcasting channel, and there are sections such as a program association table (PAT), program map table (PMT), network information table (NIT) and condition access table (CAT). PID of video, audio and additional data, and a program clock reference (PCR) included in the corresponding program is described in the PMT.

In accordance with command from a CPU 219, the tuner circuit 205 performs tuning, that is, channel selection, on broadcasting waves of a predetermined channel, and outputs the received data to a subsequent moving picture expert group (MPEG) decoder 206.

First, the MPEG decoder 206 demodulates the received data which has been digitally modulated, obtains the (above-described) transport stream, interprets the transport stream, divides it into AV data compressed by means of MPEG2 and program information, and transmits the later to the CPU 219 via an internal bus 218. Subsequently, the MPEG decoder 206 divides real-time AV data compressed by means of an MPEG2 system into compressed video data and compressed audio data. Then, the MPEG decoder 206 reproduces the original video signal through extension processing by means of MPEG2 with respect to the video data, and performs pulse code modulation (PCM) decode with respect to the audio data so as to combine them with an additional sound for a reproduced audio signal.

A reproduced video signal is input to a video signal processing circuit 207, and required signal processing is performed. Thereafter, on-screen display information generated by a graphic generation circuit 208 when necessary is superimposed thereon, and is output for display on a display panel 210 using a panel drive unit 209. Signal processing performed by a video signal processing circuit 207 includes image correction processing (to be described later) such as chromaticity point correction and brightness reduction. In addition, the reproduced audio signal is input to an audio signal processing circuit 211, and required signal processing is performed. Thereafter, the signal is amplified in a desired audio level using an audio amplifying circuit 212 so as to drive a speaker 213.

As an available route for AV data of the display device 11 other than broadcasting waves, it is possible to exemplify an external source device (not illustrated) connected to a high-definition multimedia interface (HDMI) terminal 214 which is a digital interface, or a case where stereoscopic vision content distribution is received via the Internet. An HDMI reception circuit 215 allocates an input signal from the external source device connected to the HDMI terminal 214 to the video signal processing circuit 207 and the audio signal processing circuit 211. In addition, a signal received from a network terminal 217 is input to the MPEG decoder 206 via a communication processing circuit 216 of the Ethernet (registered trademark) interface. The MPEG decoder 206 extracts the video signal and the audio signal from the received signal (hereinafter, the same).

The video signal processing circuit 207, upon processing the video signal, generates a frame switchover signal required for controlling the opening and closing of shutter lenses in the shutter glasses 13, and inputs it to a control circuit 224. The control circuit 224, based on timing of the input frame switchover signal, generates a synchronization packet including synchronization information for synchronizing the opening and closing timing of left and right shutter lenses in the shutter glasses 13 side with a display image. As the synchronization information, for example, information in synchronization with a clock and a value of a counter for counting display frames are described. The synchronization packet is wirelessly transmitted from a communication unit 203 to the shutter glasses 13 using radio wave communication.

A control code infrared-transmitted in such a manner that a user remotely manipulates the display device 11 using a remote controller 223 is received by a remote controller reception unit 222. In an example illustrated in Fig. 2, an infrared communication method is used in the remote manipulation, but the above-described communication unit 203 may be shared in use for the remote manipulation.

In order to entirely control the display device 11, circuit components are provided such as a central processing unit (CPU) 219, a flash read only memory (ROM) 220 and a dynamic random access memory (DRAM) 221. The control code received by the remote controller reception unit 222 (or communication unit 203) is transferred to the CPU 219 via the internal bus 218. The CPU 219 controls an operation of the display device 11 by decoding the control code. In addition, the CPU 219 interprets the program information sent by the MPEG decoder 206 via the internal bus 218. In the present embodiment, switchover timing of the display mode in the video signal is described in a descriptor under PMT control within PSI (to be described later). The CPU 219, when interpreting the descriptor and obtaining the switchover timing of the display mode, notifies the control circuit 224 of the result via the internal bus 281. The control circuit 224, when the switchover timing of the display mode is notified, generates control information commanding the shutter glasses 13 to switch over the mode, and transmits it from the communication unit 203 to the shutter glasses 13 by containing it in the (above-described) synchronization packet, for example.

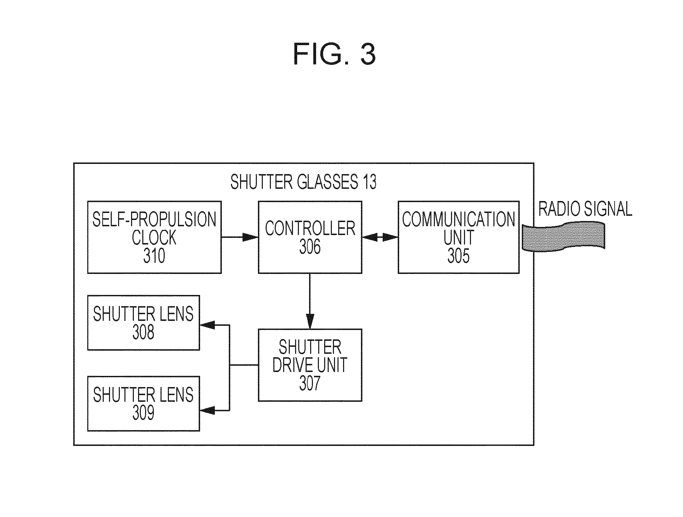

Fig. 3 illustrates an internal configuration example of the shutter glasses 13. The shutter glasses 13 include a communication unit 305 transmitting and receiving a radio signal to and from the display device 11 using the radio wave communication, a controller 306, left eye shutter lens 308 and right eye shutter lens 309 which are respectively formed from liquid crystal materials, a shutter drive circuit 307 and a self-propulsion clock 310 configured to have a crystal oscillator.

The synchronization packet is wirelessly transmitted from the display device 11 to the shutter glasses 13. Each synchronization packet includes control information which commands the switchover of the display mode in addition to information related to the opening and the closing timing of the left and right shutter lenses 308 and 309 in the shutter glasses 13 side. The communication unit 305, when receiving the synchronization packet, inputs it to the controller 306. The controller 306 interprets content described in the synchronization packet, synchronizing clock frequency of the self-propulsion clock 310 with the display device 11 side, and matches a value of the counter used for opening and closing the shutter lenses 308 and 309. Then, the controller 306 determines the opening and closing timing of the respective left and right shutter lenses 308 and 309, based on the values of the clock and the counter, until the subsequent synchronization packet is received, and controls the opening and closing operation of the respective left and right shutter lenses 308 and 309 via the shutter drive circuit 307.

The shutter glasses 13 are driven by a battery (not illustrated) as a main power source. For each instance when the capacity of the battery is reduced, it is necessary to replace the battery or to charge the battery. The communication unit 305 is configured to perform an intermittent reception operation so as not to waste power for signal reception.

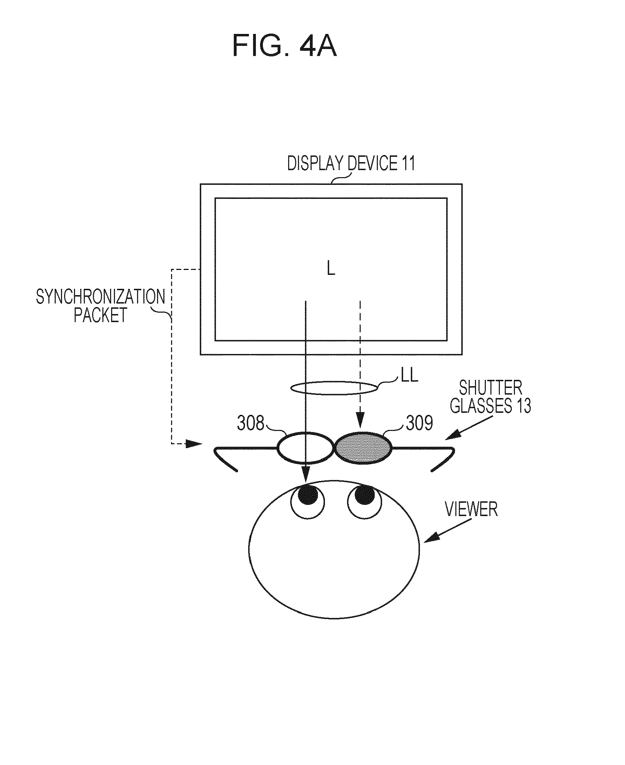

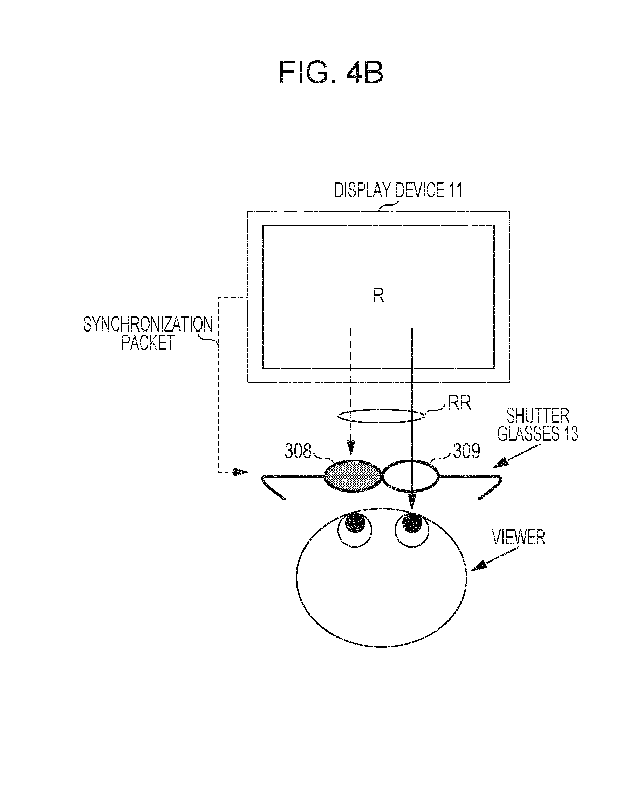

Fig. 4A illustrates a control operation of the shutter glasses 13 in synchronization with a display period of a left eye image L of the display device 11. As illustrated in Fig. 4A, during the display period of the left eye image L, if the left eye shutter lens 308 is set to an open state and the right eye shutter lens 309 is set to a closed state according to the synchronization packet wirelessly transmitted from the display device 11 side, display light LL based on the left eye image L reaches only the left eye of a viewer. In addition, Fig. 4B illustrates a control operation of the shutter glasses 13 in synchronization with a display period of a right eye image R. As illustrated in Fig. 4B, during the display period of the right eye image R, if the right eye shutter lens 309 is set to an open state and the left eye shutter lens 308 is set to a closed state, display light RR based on the right eye image R reaches only the right eye of a viewer.

The display device 11 alternately displays the left eye image L and the right eye image R for each field when in a 3D display mode. In the shutter glasses 13 side, the left and right shutter lenses 308 and 309 alternately perform the opening and closing operation in synchronization with image switchover for each field of the display device 11. The image displayed by the display device 11 is stereoscopically recognized by the viewer since the left eye image L is combined with the right eye image R.

In addition, when in a 2D display mode, the display device 11 does not perform the switchover between the left eye image L and the right eye image R. Then, in the shutter glasses 13 side, a shutter clear state, that is, an open state of both of the left and right shutter lenses 308 and 309 is maintained.

As described above, the wireless network such as IEEE802.15.4 is used for the communication between the display device 11 and the shutter glasses 13. With regard to the communication protocol of a logical layer or above in IEEE802.15.4, Zigbee Alliance performs the formulation of the specification.

The wireless network needs higher power consumption as compared to the infrared communication. If the display device 11 performs the notification of the timing for every opening and closing of the shutter lenses 308 and 309, and the shutter glasses 13 cause the communication unit 305 to always wait for the reception power consumption for the signal reception is increased, which results in frequent and inconvenient replacement or charging of the battery.

Therefore, in the present embodiment, the synchronization packet is transmitted from the display device 11 to the shutter glasses 13, with a longer interval than the opening and closing cycle of the shutter lenses 308 and 309, and the shutter glasses 13 stops the reception operation for most of the non-reception period of the synchronization packet, whereby reducing the power consumption. The synchronization packet contains information related to the timing, cycle, phase, and opening and closing time of the shutter lenses which serve as a reference for the opening and closing control of the shutter lenses. In the shutter glasses 13 side, the controller 306 synchronizes with the self-propulsion clock 310 based on the content described in the synchronization packet. Then, the opening and closing of the shutter lenses are controlled using the self-propulsion clock 310 until the subsequent synchronization packet is received.

Herein, in order to prevent crosstalk, it is necessary to suppress a phase shift between the switchover timing of the image in the display device 11 and the opening and closing timing of the shutter lenses 308 and 309 in the shutter glasses 13, to 100 microseconds or less. Accuracy available with a general crystal oscillator is 30 ppm and deviation of maximum 30 microseconds occurs in one second. Therefore, after the synchronization is implemented by the synchronization packet, the synchronization of the self-propulsion clock 310 can be maintained in the shutter glasses 13 side for three seconds. Accordingly, it is sufficient if the display device 11 would transmit the synchronization packet once in three seconds. However, when considering that a packet reception error may occur for some reason, or when the synchronization packet is transmitted to multiple shutter glasses in the broadcasting manner, a retransmission request cannot be made even if the shutter glasses 13 fail to receive the packet. For these reasons, it is considered that the transmission cycle of the synchronization packet is reasonably set to a maximum of one second. It is sufficient if the shutter glasses 13 perform the intermittent reception in the cycle of one second so as to receive the synchronization packet.

In addition, the display device 11 has some display modes and the shutter glasses 13 has to control the opening and closing operation of the shutter lenses 308 and 309 in response to the display mode. In a case of the 3D display mode where the left eye image and the right eye image are displayed in the time-sharing manner, the opening and closing operation of the shutter lenses 308 and 309 have opposite phases in the shutter glasses 13 side (For example, refer to Figs. 4A and 4B) . In addition, in a case of the 2D display mode, both of the shutter lenses 308 and 309 are kept in a shutter clear state, that is, in an open state, in the shutter glasses 13 side. Further, the display device 11 has a dual view mode which changes a display for each looking direction at a screen. In this case, in the shutter glasses 13 side, the shutter lenses 308 and 309 have to be in the same phase in an odd number of screens or the shutter lenses 308 and 309 have to be in the same phase in an even number of screens.

The display device 11 transmits the control information notifying the switchover of the display mode to the shutter glasses 13 and thereby controls the opening and closing of the shutter lenses 308 and 309 in the shutter glasses 13 side. If the control information is contained in the synchronization packet, the shutter glasses 13 are not necessarily provided with an individual reception period in order to acquire the synchronization information and the control information, which can lengthen a period during which reception operation can be stopped.

However, if the shutter glasses 13 perform the intermittent reception and stop the reception operation most of the time, the control information cannot be notified until the subsequent reception period even if the display mode is switched over in the meantime in the display device 11 side. Since the notification is not available in the cycle of a maximum of one second, there is a possibility that the control of the shutter glasses 13 may be delayed. In this case, the viewer wearing the shutter glasses 13 can no longer view a normal display image.

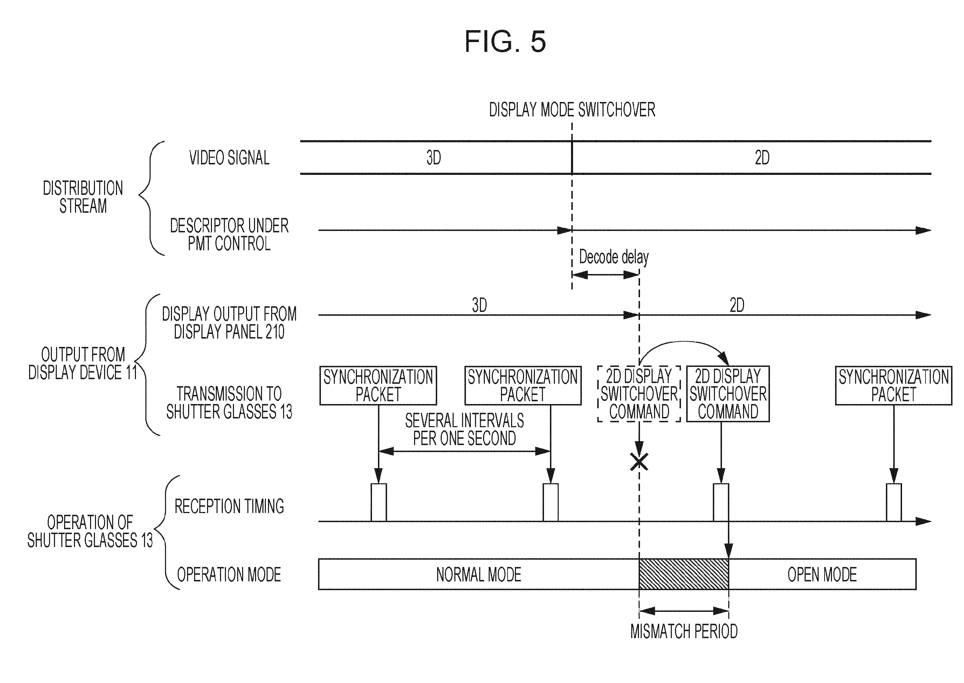

Fig. 5 illustrates an operation example in a case where the control of the shutter glasses 13 is delayed in the switchover of the display mode in the display device 11 side.

The broadcasting wave received by the antenna 240 and the tuner circuit 205 of the display device 11 is a transport stream where TS packets such as PMT are multiplexed to the video (refer to the above).

As illustrated in Fig. 5, the display mode is switched over from 3D to 2D in the middle of the video signal. A case where the display mode is switched over from 3D to 2D in the video signal, for example, includes the end time of a 3D broadcast program and the time of an inserted 2D display CM during the 3D broadcast program. In addition, if the CM ends, it is contemplated that the display mode returns to 3D. The digital broadcasting standards can be formulated such that the information about the switchover timing of the display mode in the video signal is described in the descriptor under the PMT control.

In the display device 11, if the above-described transport stream is received, the MPEG decoder 206 divides it into the AV data and the program information, further divides the AV data into the compressed video data and the compressed audio data, and reproduces the original video signal through the extension processing by means of MPEG2 with respect to the video data. If the video signal is switched over from 3D to 2D, after only the delay time (decode delay) resulting from the decoding in the MPEG decoder 206, the display on the display panel 210 is switched over from 3D to 2D.

In addition, the shutter glasses 13 perform the intermittent reception by providing the reception period at intervals of several times per second. The display device 11 transmits the synchronization packet in response to the timing of the reception period.

From the time when the video signal is switched over from 3D to 2D, the display device 11 can recognize the change in the display mode after the delay time. However, since the shutter glasses 13 perform the intermittent reception, if the display device 11 does not wait for the timing which causes the shutter glasses 13 to perform the reception operation, the display device 11 cannot command the shutter glasses 13 to switch over to the display mode. The command can be performed by superimposing it on the synchronization packet.

The shutter glasses 13, upon receiving the command of the switchover to 2D display mode, enter the shutter clear state in response to the 2D display. After the 3D display is switched over to the 2D display on the display panel 210 of the display device 11, the shutter glasses 13 cannot enter the shutter clear state until the timing when the shutter glasses perform the subsequent reception operation. Thus, a mismatch period may occur between the shutter opening and closing operation of the shutter glasses 13 and the screen display. During the mismatch period, the viewer wearing the shutter glasses 13 cannot view a normal display image.

Therefore, in order not to cause such a mismatch period to occur, the present inventors propose a method where the display device 11 recognizes the switchover timing of the display mode in advance and commands the shutter glasses 13 to perform the continuous reception. Since the shutter glasses 13 start the continuous reception in advance, even if the display device 11 transmits the packet commanding the switchover of the display mode at any timing when the display is switched over from 3D to 2D on the display panel 210, the shutter glasses 13 can receive the packet and can switch over to the appropriate shutter opening and closing control.

The shutter glasses 13, if the continuous reception is commanded using the synchronization packet, start the continuous reception and wait for the signal reception from the display device 11. Then, the shutter glasses 13, upon receiving the packet commanding the switchover of the display mode, immediately switch over to the shutter opening and closing control in response to the display mode. In addition, the shutter glasses 13, upon receiving the packet commanding the switchover of the display mode, stop the continuous reception and return to the original state of the intermittent reception.

Here, the packet commanding the switchover of the display mode may have the same format as the periodically transmitting synchronization packet or may have a different format. Alternately, the switchover of the display mode may be notified by setting a flag commanding the switchover of the display mode in the synchronization packet.

As the error processing, the shutter glasses 13, when the packet does not come from the display device 11, even if the continuous reception is continued for a certain period only, may stop the continuous reception and may return to the original state of the intermittent reception.

In addition, for the error processing purpose, the display device 11 may be configured to insert the information indicating the current display mode into the periodically transmitting synchronization packet. The shutter glasses 13, upon receiving the synchronization packet, check whether or not the shutter opening and closing control currently performed by the shutter glasses 13 matches the display mode indicated in the packet. Then, in a case of the mismatch, the shutter glasses 13 immediately switch over to the shutter opening and closing control in response to the display mode. Although time lag occurs in the switchover of the shutter opening and closing operation, the shutter glasses 13 can follow the switchover of the display mode within a cycle of the intermittent reception.

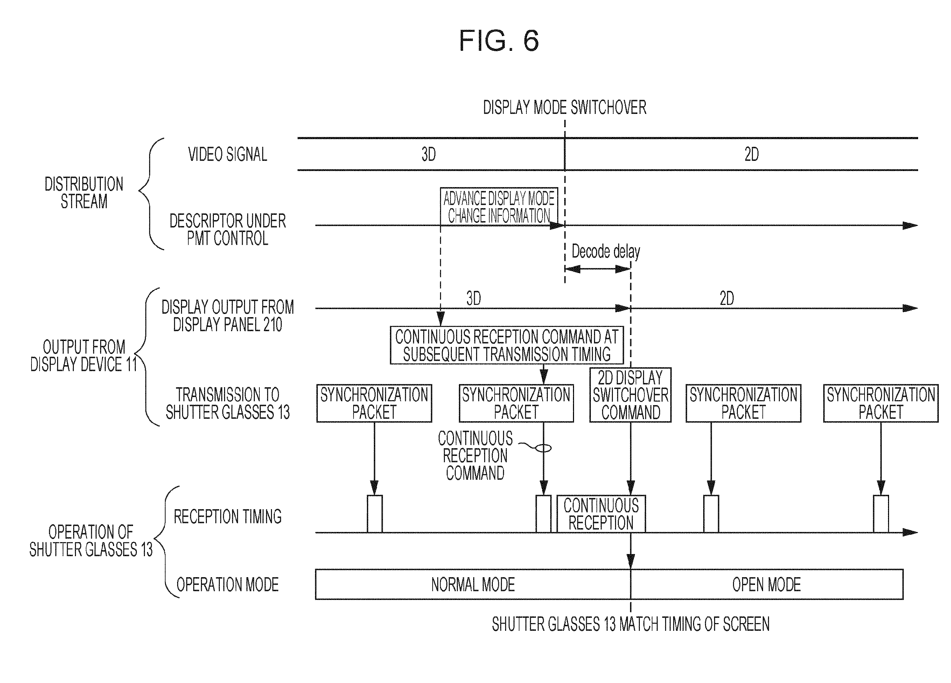

Fig. 6 illustrates an operation example in a case where the display device 11 recognizes the switchover of the display mode in advance, and commands the shutter glasses 13 to perform the continuous reception.

The broadcasting wave received by the antenna 240 and the tuner circuit 205 of the display device 11 is the transport stream where TS packets such as PMT are multiplexed to the video (described above). As illustrated in Fig. 6, the display mode is switched over from 3D to 2D in the middle of the video signal. A case where the display mode is switched over from 3D to 2D in the video signal, for example, includes the end time of a 3D broadcast program and the time of an inserted 2D display CM during the 3D broadcast program. In addition, if the CM ends, it is also contemplated that the display mode returns to 3D (the same as above).

The digital broadcasting standards can be formulated such that the information about the switchover timing of the display mode in the video signal is described in the descriptor under the PMT control. Furthermore, in other words, the digital broadcasting standards can be formulated such that information (hereinafter, referred to as "advance display mode change information") notifying the switchover of the display mode in advance is described in the descriptor under the PMT control, before only a predetermined period of time (for example, several seconds) when the display mode of the video signal is switched over.

In the display device 11, if the above-described transport stream is received, the MPEG decoder 206 divides it into the video signal and the program information such as the PMT. Then, the content described in the descriptor under the PMT control is interpreted by the CPU 219, and based on the above-described advance display mode change information, it is possible to recognize in advance that the video signal is switched over from the 3D display mode to the 2D display mode after a predetermined period of time has elapsed from the current time. However, the method where the display device 11 recognizes in advance the switchover of the display mode of the video signal is not limited to a particular method, and the method of using the descriptor under the PMT control is only an example.

On the other hand, the shutter glasses 13 perform the intermittent reception by providing the reception period at intervals of several times per second. The display device 11, upon recognizing in advance that the video signal is switched over from the 3D display mode to the 2D display mode after a predetermined period of time has elapsed from the current time, transmits the synchronization packet containing the command of the continuous reception (or an advance notification of the switchover of the display mode) in response to the timing when the shutter glasses 13 perform the subsequent reception operation. Then, the shutter glasses 13, if the continuous reception is commanded using the synchronization packet (or if the switchover of the display mode is notified in advance), start the continuous reception and wait for the signal reception from the display device 11.

Thereafter, in the display device 11, the MPEG decoder 206 continues to perform the decoding of the AV data divided from the transport stream and reproduces the original video signal through the extension processing by means of MPEG2 with respect to the video data. Then, if the video signal is switched over from 3D to 2D, after only the delay time resulting from the decoding in the MPEG decoder 206, the display on the display panel 210 is switched over from 3D to 2D.

At this time, the shutter glasses 13 perform the continuous reception. Therefore, the display device 11, upon recognizing the change in the display mode after the above-described delay time following the switchover from 3D to 2D in the video signal, can transmit the packet commanding the shutter glasses 13 to immediately switch over to the display mode. The packet commanding the switchover of the display mode may have the same format as the periodically transmitting synchronization packet or may have a different format. Alternately, the switchover of the display mode may be notified by setting a flag commanding the switchover of the display mode in the synchronization packet.

The shutter glasses 13, upon receiving the command of the switchover to 2D display mode, enter the shutter clear state in response to the 2D display. That is, almost simultaneously with the switchover of the display from 3D to 2D on the display panel 210 in the display device 11 side, the shutter glasses 13 enter the shutter clear state. Accordingly, unlike the operation example illustrated in Fig. 5, the mismatch period does not occur between the shutter opening and closing operation of the shutter glasses 13 and the screen display. Therefore, the viewer wearing the shutter glasses 13 can always view a normal display image even if the switchover of the display mode occurs.

The shutter glasses 13, upon receiving the packet commanding the switchover of the display mode, stop the continuous reception and return to the original state of the intermittent reception, which reduces the power consumption due to the signal reception.

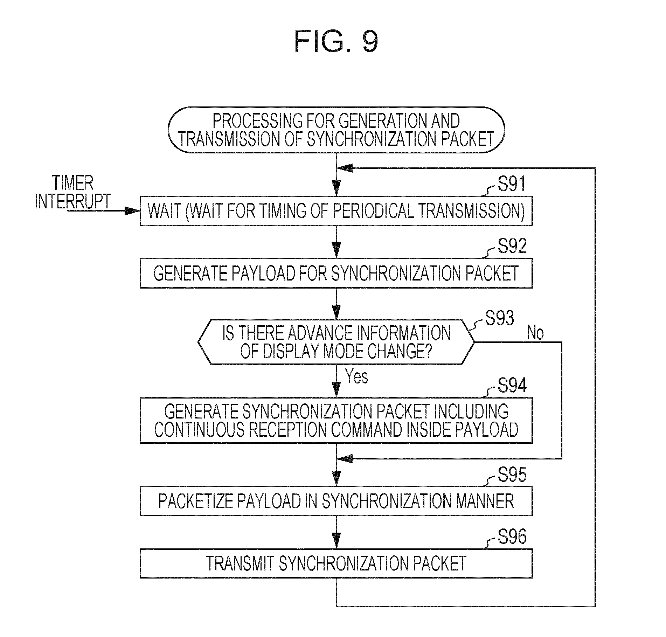

Fig. 9, in the operation example illustrated in Fig. 6, illustrates a processing procedure for the display device 11 to transmit the synchronization packet to the shutter glasses 13, in a flowchart manner. The illustrated processing procedure can be realized, for example, in a form where the CPU 11 executes a predetermined program code.

The display device 11, using timer interrupt, enters a waiting state (WAIT) for the transmission of the periodically transmitting synchronization packet (Step S91). The timer interrupt is assumed to occur immediately before the timing of transmitting the synchronization packet.

Then, in the control circuit 224, generation processing of the payload of the synchronization packet is performed (Step S92).

Subsequently, it is checked whether or not the advance information on performing the switchover of the display mode is present (Step S93). The CPU 219 may interpret the program information transferred from the MPEG decoder 206 and may check whether or not the advance display mode change information is described in the descriptor under the PMT control (described above).

Herein, in a case where the advance information is present in which the switchover of the display mode is to be performed (Yes in Step S93), in the control circuit 224, the command of the continuous reception (or information notifying in advance that the display mode is to be switched over) is included inside the payload of the synchronization packet generated in Step S92 (Step S94). In addition, in a case where the advance information is not present in which the switchover of the display mode is to be performed (No in Step S93), the process in Step S94 is skipped.

Then, in the control circuit 224, the generated payload is packetized in the synchronization manner by attaching header information or the like (Step S95), and then the synchronization packet is transmitted from the communication unit 203 to the shutter glasses 13 (Step S96).

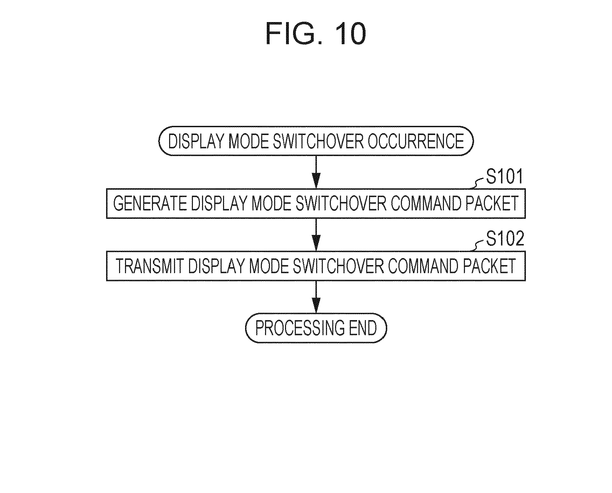

In addition, Fig. 10, in the operation example illustrated in Fig. 6, illustrates a processing procedure for the display device 11 to command the shutter glasses 13 to switch over to the display mode, in a flowchart manner. The illustrated processing procedure can be realized, for example, in a form where the CPU 11 executes a predetermined program code.

If the video signal is switched over from 3D to 2D, after only the delay time resulting from the decoding in the MPEG decoder 206, the display device 11 side recognizes that the display mode is switched over, and the display on the display panel 210 is switched over from 3D to 2D.

In response to this, the control circuit 224 generates the packet commanding the switchover of the display mode (Step S101), and the packet is transmitted from the communication unit 203 to the shutter glasses 13 (Step S102) .

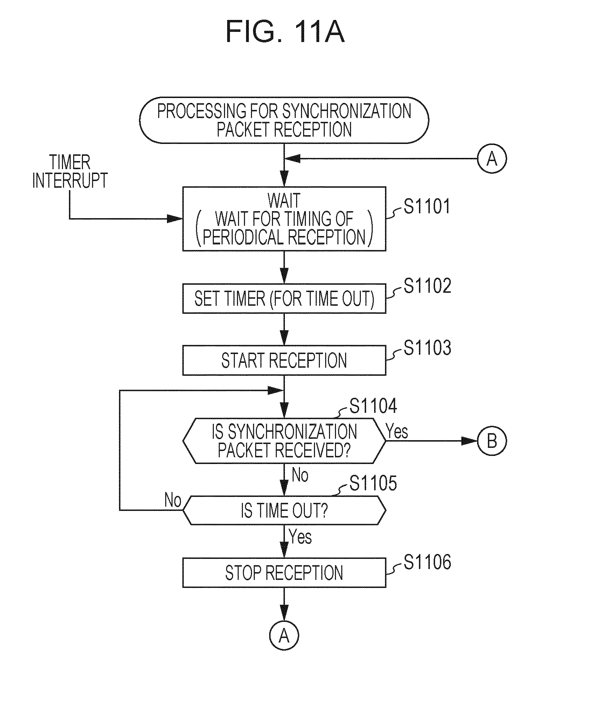

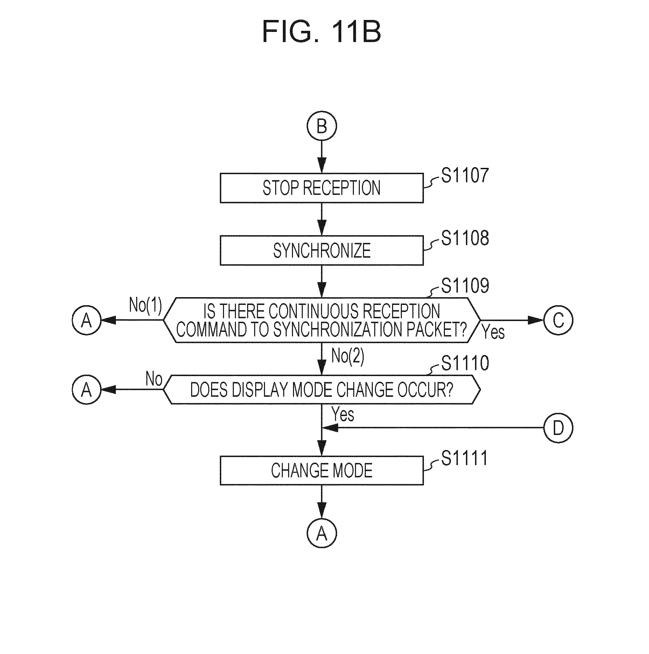

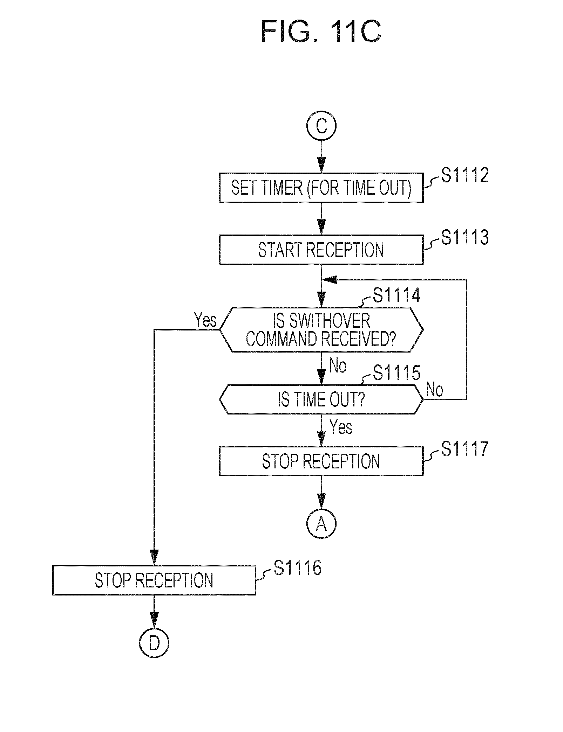

In addition, Figs. 11A to 11C, in the operation example illustrated in Fig. 6, illustrate a processing procedure for the shutter glasses 13 to receive the synchronization packet from the display device 11, in a flowchart manner. The illustrated processing procedure can be realized, for example, in a form where the controller 306 executes a predetermined program code.

The shutter glasses 13, using the timer interrupt, enter the waiting state (WAIT) for the synchronization packet by periodically providing the reception period (Step S1101). The timer interrupt is assumed to occur immediately before the timing of transmitting the synchronization packet.

Subsequently, the shutter glasses 13 set the timer in order to end the reception period (Step S1102) and start the reception operation in the communication unit 305 (Step S1103). Then, until the timer set in Step S1102 is timed out (No in Step S1105), the shutter glasses 13 cause the communication unit 305 to wait for the reception.

When the synchronization packet cannot be received until the time-out (No in Step S1104, Yes in Step S1105), the reception operation of the communication unit 305 is stopped (Step S1106) and the process returns to Step S1101 so as to wait for the timing of the subsequent periodical reception.

In addition, when the synchronization packet can be received until the time-out (Yes in Step S1104), after the reception operation of the communication unit 305 is stopped (Step S1107), the synchronization processing with the display device 11 is performed, based on the information described in the synchronization packet (Step S1108). In the synchronization processing, the synchronization of the self-propulsion clock 310 is implemented, based on the content described in the synchronization packet. As a result, the timing, cycle and phase for opening and closing the shutter lenses 308 and 309 are configured to appropriately meet the timing when the left eye image and the right eye image are switched over on the display panel 210 of the display device 11 side.

Subsequently, the shutter glasses 13 check whether or not the command of the continuous reception is contained in the received synchronization packet (Step Sal109) .

If the command of the continuous reception is not contained in the received synchronization packet (No (1) in Step S1109), the process returns to Step S1101 so as to wait for the timing of the subsequent periodical reception.

Alternatively, if the command of the continuous reception is not contained in the received synchronization packet (No (2) in Step S1109), with reference to the information indicating the current display mode inserted into the synchronization packet, it is checked whether or not a change in the display mode occurs in the display device 11 side (Step S1110). Then, when the change in the display mode occurs (Yes in Step S1110), the shutter glasses 13 perform the processing corresponding thereto (Step S1111) and then the process returns to Step S1101 so as to wait for the timing of the subsequent periodical reception. For example, in a case of the switchover from the 3D display mode to the 2D display mode, the shutter glasses 13 enter the open mode from the normal mode.

In addition, if the command of the continuous reception is contained in the received synchronization packet (Yes in Step S1109), the shutter glasses 13 set the timer in order to end the waiting for the command reception of the switchover of the display mode (Step S1112) and start the continuous reception operation in the communication unit 305 (Step S1113). Then, until the timer set in Step S1102 is timed out (No in Step S1115), the shutter glasses 13 cause the communication unit 305 to wait for the reception.

When the switchover command of the display mode cannot be received until the time-out (No in Step S1114, Yes in Step S1115), the continuous reception operation of the communication unit 305 is stopped (Step S1117) and the process returns to Step S1101 so as to wait for the timing of the subsequent periodical reception.

In addition, when the switchover command of the display mode can be received until the time-out (Yes in Step S1114), after the continuous reception operation of the communication unit 305 is stopped (Step S1116) and the shutter glasses 13 perform the processing corresponding to the display mode after the switchover (Step S1111). For example, in a case of the switchover from the 3D display mode to the 2D display mode, the shutter glasses 13 enter the open mode from the normal mode. Thereafter, the shutter glasses 13, returning to Step S1101, wait for the timing of the subsequent periodical reception.

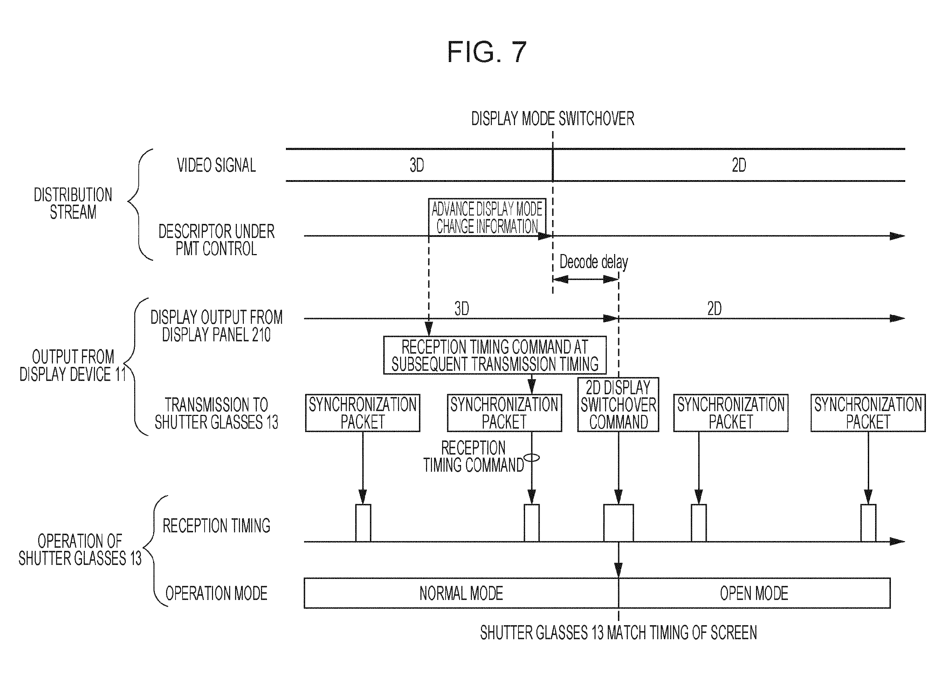

As an alternative method illustrated in Fig. 6, a method is considered in which the display device 11 recognizing the switchover of the display mode in advance notifies the shutter glasses 13 of the timing when commanding the shutter glasses 13 to switch over to the display mode. Fig. 7 illustrates an operation example in a case where the display device 11 recognizes the switchover of the display mode in advance and notifies the shutter glasses 13 of the timing when commanding the shutter glasses 13 to switch over to the display mode.

The display device 11, upon recognizing in advance that similarly to the above-described example, the video signal is switched over from the 3D display mode to the 2D display mode, transmits the synchronization packet containing the notification of the switchover timing of the display mode to the shutter glasses 13 in response to the timing when the shutter glasses 13 perform the subsequent reception operation.

In contrast, the shutter glasses 13, if the synchronization packet notifies the switchover timing of the display mode, start the reception operation in response to the timing and wait for the reception.

Thereafter, if the video signal is switched over from 3D to 2D, in the display device 11, after only the delay time resulting from the decoding in the MPEG decoder 206, the display on the display panel 210 is switched over from 3D to 2D.

The shutter glasses 13 perform the reception operation in response to the timing when the display mode is switched over. Therefore, the display device 11, upon recognizing the change in the display mode after the above-described delay time from the point when the video signal is switched over from 3D to 2D, can transmit the packet commanding the shutter glasses 13 to immediately switch over to the display mode.

The shutter glasses 13, upon receiving the switchover command to the 2D display mode, enter the shutter clear state in response to the 2D display. That is, almost simultaneously with the switchover of the display from 3D to 2D on the display panel 210 in the display device 11 side, the shutter glasses 13 enter the shutter clear state. Accordingly, similarly to the operation example illustrated in Fig. 6, the mismatch period does not occur between the shutter opening and closing operation of the shutter glasses 13 and the screen display. Therefore, the viewer wearing the shutter glasses 13 can always view a normal display image even if the switchover of the display mode occurs.

Thereafter, the shutter glasses 13 continue to perform the intermittent reception, which reduces the power consumption due to the signal reception.

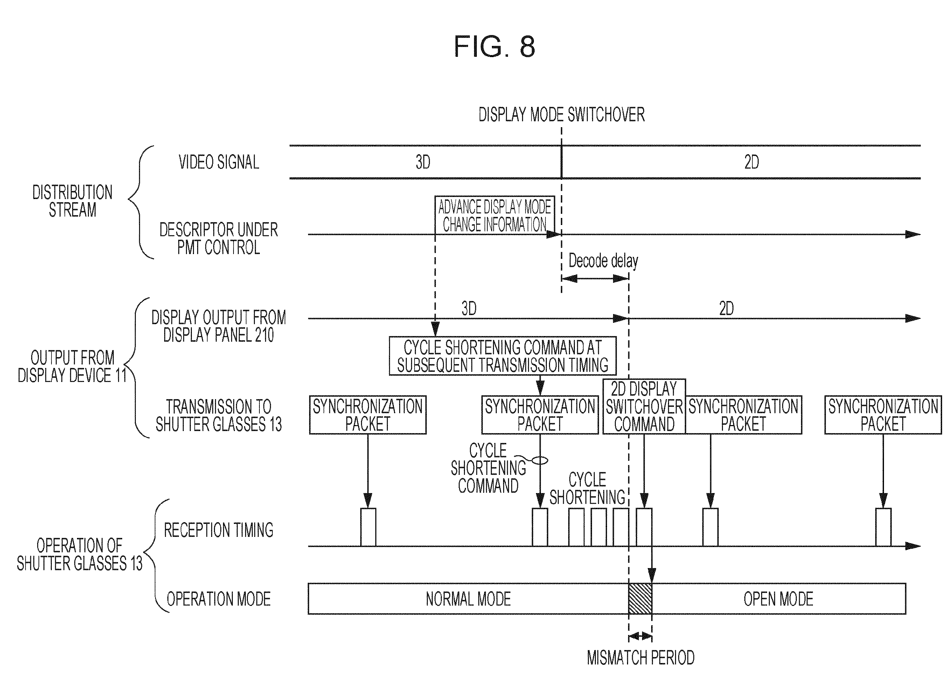

In addition, as an alternative method illustrated in Fig. 6, a method is considered in which the display device 11 recognizing the switchover of the display mode in advance commands the shutter glasses 13 to shorten the cycle of the intermittent reception. Fig. 8 illustrates an operation example in a case where the display device 11 recognizes the switchover of the display mode in advance and commands the shutter glasses 13 to shorten the cycle of the intermittent reception.

The display device 11, upon recognizing in advance that similarly to the above-described example, the video signal is switched over from the 3D display mode to the 2D display mode, transmits the synchronization packet containing the command to shorten the cycle of the intermittent reception (or the advance notification of the switchover of the display mode) to the shutter glasses 13 in response to the timing when the shutter glasses 13 perform the subsequent reception operation.

In contrast, the shutter glasses 13, when receiving the command to shorten the cycle of the intermittent reception in the packet (or if the switchover of the display mode is notified in advance), shorten the cycle and perform the intermittent reception.

Thereafter, if the video signal is switched over from 3D to 2D, in the display device 11, after only the delay time resulting from the decoding in the MPEG decoder 206, the display on the display panel 210 is switched over from 3D to 2D.

Since the shutter glasses 13 perform the intermittent reception in a short cycle, the display device 11, upon recognizing the change in the display mode, can transmit the packet commanding the shutter glasses 13 to switch over to the display mode within a shorter period of time than that in the operation example illustrated in Fig. 5.

The shutter glasses 13, upon receiving the switchover command to the 2D display mode, enter the shutter clear state in response to the 2D display. That is, if the display on the display panel 210 is switched over from 3D to 2D in the display device 11 side, the shutter glasses 13 enter the shutter clear state within a relatively short period of time. Unlike the operation examples in Figs. 6 and 7, the mismatch period occur between the shutter opening and closing operation of the shutter glasses 13 and the screen display, but the mismatch period is shorter than that of the operation example illustrated in Fig. 5.

Thereafter, the shutter glasses 13 return the cycle of the intermittent reception to the original state, which reduces the power consumption due to the signal reception.

The open mode for keeping the left and right shutter lenses 308 and 309 in the open state is the same as the state in which the power supply of the shutter glasses 13 is turned off. A modification example may be considered in which when the video signal is switched over from the 3D display mode to the 2D display mode, the display device 11 command the shutter glasses 13 to switch off the power supply rather than to command the open mode. However, in some cases, such as a case where the CM of the 2D display mode ends and the main television program restarts, the display mode returns to the 3D display mode thereafter. However, if the power supply is switched off, the shutter glasses 13 cannot return to the normal mode. Therefore, the descriptor under the PMT control may have the description as to whether the video signal has either the ended 3D display mode or the temporary 2D display mode, together with the information about the timing when the video signal is switched over to the 2D display mode. When the video signal is switched over from the 3D display mode to the 2D display mode, the display device 11 may command the shutter glasses 13 to switch off the power supply if it is the former ended 3D display mode, and may command the shutter glasses 13 to have the open mode if it is the latter temporary 2D display mode.

A disadvantage, as illustrated in Fig. 5, that the mismatch period may occur between the shutter opening and closing operation of the shutter glasses 13 and the screen display can be solved in such a manner as the operation examples illustrated in Figs. 6 to 8, the shutter glasses 13 are kept in the reception waiting state at the timing when the display mode of the video signal is switched over, so as to be capable of receiving the command of the display mode switchover from the display device 11.

The display device 11 interprets the descriptor under the PMT control, which is multiplexed into the received transport stream or otherwise using any other method, recognizes, in advance before a predetermined period of time (for example, several seconds), that the display mode of the video signal is to be switched over, and on this basis, keeps the shutter glasses 13 in the reception waiting state. Then, if the display mode of the video signal is actually switched over, the display device 11 can command the shutter glasses 13 to immediately switch over to the display mode.

The shutter glasses 13, upon receiving the advance command from the display device 11, start the continuous reception, or shorten the cycle of the intermittent reception, or otherwise wait for the designated timing to start the reception operation. Then, the shutter glasses 13 switch over the operation mode of the shutter lenses 308 and 309 in response to the display mode switchover command received from the display device 11. In addition, the shutter glasses 13, upon receiving the display mode switchover command received from the display device 11, stop the operation of the continuous reception or the intermittent reception in the short cycle, and restart the intermittent reception in the original cycle.

In the operation examples illustrated in Figs. 6 to 8, it may be determined in view of the maximum cycle of transmitting the synchronization packet how earlier the display device 11 has to recognize the switchover of the display mode before the display mode of the video signal is switched over. In addition, the timing when the display device 11 recognizes that the display mode of the video signal has been switched over, and commands the shutter glasses 13 to switch over to the display mode may be determined in view of the timing of advance acquisition of the switchover information or the synchronization packet transmission cycle for each device and its processing period of time.

In Figs. 6 to 8, a case is exemplified where the video signal is switched over from the 3D display mode to the 2D display mode and in response thereto, the shutter glasses 13 are switched over from the normal mode in which the left and right shutter lenses 308 and 309 are alternately opened and closed to the shutter clear state, that is, the open mode in which the left and right shutter lenses 308 and 309 are kept in the open state. Conversely, similarly even in a case where the video signal is switched over from the 2D display mode to the 3D display mode and in response thereto, the shutter glasses 13 are caused to return from the open mode to the normal mode, the display device 11 recognizing the switchover of the display mode in advance may perform the timing notification commanding the shutter glasses 13 to perform the continuous reception and to switch over to the display mode, or may perform the command to shorten the cycle of the intermittent reception. Furthermore, the operations described using Figs. 6 to 8 can be similarly applied to a case of the switchover to the dual mode or returning from the dual mode.

### Industrial Applicability

Hitherto, with reference to the specific embodiments, the present invention has been described. However, it is apparent that those skilled in the art can modify or substitute the embodiments in the range without departing from the gist of the present invention.

In the present specification, as the display device displaying the mutually different multiple images in the time-sharing manner, the embodiments using the liquid crystal display have been mainly described, but the gist of the present invention is not limited thereto. For example, in addition to the traditional cathod ray tube (CRT) display, the plasma display panel (PDP) and the electro-luminescence (EL) panel can be used.

In addition, in the present specification, as communication means for connecting the shutter glasses and the display device, for example, the embodiments adopting the wireless network such as IEEE802.15.4 have been mainly described, but the gist of the present invention is not limited thereto. If the two-way communication is available between the shutter glasses and the display device, it is also possible to adopt other radio communication technologies or wired communication technologies.

A series of processing in the embodiments described in the present specification can be performed by either hardware or software. In a case where the processing is realized by the software, a computer program in which the processing procedure in the software is described in a computer-readable format is installed and executed in a predetermined computer. In addition, the computer program can also be incorporated into products such as the liquid crystal display.

In short, the present invention has been disclosed by way of example, and the described content of the present specification cannot be limitedly construed. In order to determine the gist of the present invention, it has to refer to claims.

### Reference Signs List

- 11: display device
- 12: communication unit
- 13: shutter glasses
- 203: communication unit
- 204: antenna
- 205: tuner circuit
- 206: MPEG decoder
- 207: video signal processing circuit
- 208: graphic generation circuit
- 209: panel drive unit
- 210: display panel
- 211: audio signal processing circuit
- 212: audio amplifier circuit
- 213: speaker
- 214: HDMI terminal
- 215: HDMI reception circuit
- 216: communication processing circuit
- 217: network terminal
- 218: inner bus
- 219: CPU
- 220: flash ROM
- 221: DRAM
- 222: remote controller reception unit
- 223: remote controller
- 305: communication unit
- 306: controller
- 307: shutter drive circuit
- 308: left eye shutter
- 309: right eye shutter
- 310: self-propulsion clock

## Claims

1. An image display system comprising:
shutter glasses having shutter lenses, a communication unit, and a controller controlling an opening and closing operation of the shutter lenses according to a display mode of an image to be viewed through the shutter lenses; and
a display device having a display unit with a plurality of display modes, and a communication unit communicating with the shutter glasses,
wherein the display device, when recognizing in advance that the display mode is to be switched over in the display unit, commands the shutter glasses to perform a reception operation, and transmits a packet notifying switchover of the display mode to the shutter glasses at the point of time when the display mode is switched over in the display unit, and
wherein the shutter glasses perform reception processing using the communication unit according to the command from the display device, and start control of the opening and closing operation of the shutter lenses in response to the display mode which has been switched over, according to the received packet notifying that the display mode has been switched over.

2. The image display system according to claim 1,
wherein the shutter glasses cause the communication unit to perform intermittent reception,
wherein the display device, when recognizing in advance that the display mode is to be switched over in the display unit, uses a period when the shutter glasses cause the communication unit to perform a reception operation, and transmits a packet commanding the shutter glasses to perform the reception operation to the shutter glasses, and
wherein the shutter glasses, when receiving the command packet, start continuous reception or shorten a cycle of the intermittent reception.

3. The image display system according to claim 2,
wherein the shutter glasses restart the intermittent reception on the original cycle after starting the continuous reception or shortening the cycle of the intermittent reception, when receiving the packet notifying the switchover of the display mode from the display device, or when the packet cannot be received within a predetermined period.

4. The image display system according to claim 1,
wherein the display device, when recognizing in advance timing when the display mode is to be switched over in the display unit, commands the shutter glasses to perform the reception operation in response to the timing, and
wherein the shutter glasses perform the reception operation of the communication unit in response to the timing, according to the command received from the display device.

5. The image display system according to claim 1,
wherein the shutter glasses cause the communication unit to intermittently perform reception,
wherein the display device, when the display unit displays a stereoscopic image, using a reception period of intermittent reception in the shutter glasses side, transmits a synchronization packet including information required for the opening and closing operation of the shutter lenses in synchronization with display of the stereoscopic image, and the shutter glasses control the opening and closing operation of the shutter lenses based on content described in the synchronization packet, and
wherein the display device, when recognizing in advance that the display mode is to be switched over in the display unit, transmits the synchronization packet including the command of the reception operation to the shutter glasses, using a period when the shutter glasses cause the communication unit to perform the reception operation.

6. The image display system according to claim 5,
wherein the display device describes information related to the current display mode of the display unit, in the synchronization packet, and
wherein the shutter glasses start controlling the opening and closing operation of the shutter lenses in response to the display mode indicated by the received synchronization packet.

7. A display device comprising:
a display unit having a plurality of display modes; and
a communication unit communicating with shutter glasses,
wherein the display device, when recognizing in advance that the display mode is to be switched over in the display unit, commands the shutter glasses to perform a reception operation, and
wherein the display device transmits a packet notifying switchover of the display mode to the shutter glasses at the point of time when the display mode is switched over in the display unit.

8. The display device according to claim 7,
wherein the shutter glasses cause the communication unit to intermittently perform reception, and
wherein the display device, when recognizing in advance that the display mode is to be switched over in the display unit, uses a period when the shutter glasses cause the communication unit to perform a reception operation, and transmits a packet commanding the shutter glasses to perform the reception operation to the shutter glasses.

9. The display device according to claim 7,
wherein the shutter glasses cause the communication unit to intermittently perform reception,
wherein the display device, when the display unit displays a stereoscopic image, using a reception period of intermittent reception in the shutter glasses side, transmits a synchronization packet including information required for the opening and closing operation of the shutter lenses in synchronization with display of the stereoscopic image, and
wherein the display device, when recognizing in advance that the display mode is to be switched over in the display unit, transmits the synchronization packet including the command of the reception operation with respect to the shutter glasses, using a period when the shutter glasses cause the communication unit to perform the reception operation.

10. The display device according to claim 9,
wherein the display device describes information related to the current display mode of the display unit, in the synchronization packet.

11. Shutter glasses comprising:
shutter lenses;
a communication unit; and
shutter glasses including a controller controlling an opening and closing operation of the shutter lenses according to a display mode in a display device, which is viewed through the shutter lenses,
wherein the shutter glasses perform reception operation using the communication unit according to notification from the display device in advance that the display mode is to be switched over, and start control of the opening and closing operation of the shutter lenses in response to the display mode which has been switched over, according to the received packet notifying that the display mode has been switched over from the display device.

12. The shutter glasses according to claim 11, which cause the communication unit to perform intermittent reception,
wherein the communication unit starts continuous reception or shortens a cycle of the intermittent reception according to the notification from the display device in advance that the display mode is to be switched over.

13. J The shutter glasses according to claim 12,
wherein the communication unit restarts the intermittent reception on the original cycle after starting the continuous reception or shortening the cycle of the intermittent reception, when receiving the packet notifying the switchover of the display mode from the display device, or when the packet cannot be received within a predetermined period.

14. The shutter glasses according to claim 11,
wherein the controller, during a reception period of the intermittent reception using the communication unit, receives a synchronization packet including information required for the opening and closing operation of the shutter lenses in synchronization with display of a stereoscopic image, from the display device, and controls the opening and closing operation of the shutter lenses based on content described in the synchronization packet, and
wherein the communication unit starts continuous reception or shortens a cycle of the intermittent reception according to reception of the synchronization packet containing the information notifying in advance that the display mode is to be switched over.

15. The shutter glasses according to claim 14,
wherein information related to the current display mode of the display unit is described in the synchronization packet, and
wherein the controller starts control of the opening and closing operation of the shutter lenses in response to the display mode indicated by the received synchronization packet.
